# NEUE EUROPÄISCHE PATENTSCHRIFT

(11) **EP 1 485 424 B2**
(45) Veröffentlichungstag und Bekanntmachung des Hinweises auf die Entscheidung über den Einspruch: **31.03.2010**
(45) Hinweis auf die Patenterteilung: 16.08.2006
(21) Anmeldenummer: 03743859.5
(22) Anmeldetag: 10.03.2003
(51) Int. Cl.: C08G 65/26, C10L 1/18

(54) **POLYETHER UND DEREN VERWENDUNG ALS TRÄGERÖLE**
POLYETHERS AND THEIR USE AS CARRIER OILS
POLYETHERS ET UTILISATION EN TANT QU'HUILES SUPPORT

(30) Priorität: 11.03.2002 DE 10210596
(43) Veröffentlichungstag der Anmeldung: 15.12.2004
(73) Patentinhaber: BASF SE, 67056 Ludwigshafen (DE)
(72) Erfinder: STÖSSER, Michael, 67141 Neuhofen (DE); BOHRES, Edward, 68161 Mannheim (DE); GROSCH, Georg, Heinrich, 67098 Bad Dürkheim (DE); SAGER, Wilfried, 67112 Mutterstadt (DE); WALTER, Marc, 67227 Frankenthal (DE)
(74) Vertreter: Féaux de Lacroix, Stefan
(86) Internationale Anmeldenummer: PCT/EP2003/002411
(87) Internationale Veröffentlichungsnummer: WO 2003/076492

(56) Entgegenhaltungen:
- EP-A- 0 374 461
- EP-A1- 1 288 244
- EP-B1- 1 112 243
- WO-A-98/44022
- WO-A1-00/14045
- US-A- 3 941 849
- US-A- 4 877 416
- US-A- 5 227 434

## Beschreibung

Die vorliegende Erfindung betrifft Polyether, erhältlich aus 1-Butenoxid und einem Alkohol unter Verwendung einer Doppelmetallcyanid-Verbindung als Katalysator, wobei der Gehalt an ungesättigten Komponenten 15 bis 30 Mol-% beträgt, ein Verfahren zur Herstellung eines derartigen Polyethers und die Verwendung eines erfindungsgemäßen Polyethers als Trägeröl oder in einer Trägerölformulierung, insbesondere in Additivpaketen für Otto-Kraftstoffe, sowie Trägerölformulierungen und Kraftstoffe, umfassend einen erfindungsgemäßen Polyether.

In der EP-A 0 374 461 sind Kraftstoffe für Verbrennungsmaschinen beschrieben, die als eine Komponente des Trägeröls Polyether auf Basis von Propylenoxid und/oder Butylenoxid mit einer Molmasse von mindestens 500 enthalten.

Aus dem Stand der Technik sind verschiedene Herstellungsverfahren für Polyether bekannt. Polyether auf Basis von 1-Butenoxid werden konventionell durch basische Katalyse, beispielsweise unter Verwendung von Kaliumhydroxid, mit langkettigen Fettalkoholen als Starter zu monofunktionellen Polyethern umgesetzt. Diese monofunktionellen Polyether können als Trägeröle für Benzinadditive verwendet werden. Diese mittels basischer Katalyse hergestellten Polyether weisen einen gewissen Grad an ungesättigten Verbindungen, in der Regel zwischen 0,5 und weniger als 6 Mol-%, auf.

Wie beispielsweise in der WO 98/44022 beschrieben, ging man bisher davon aus, dass die bei der basisch katalysierten Polymerisation entstehenden Nebenprodukte, insbesondere Polyole und ungesättigte Komponenten, einen negativen Einfluss auf die Performance der erhaltenen Produkte haben. In der WO 98/44022 wird offenbart, dass mittels Doppelmetallcyanid-Katalyse hergestellte Polyether mit einem Anteil von weniger als 6 Mol-% an ungesättigten Verbindungen deutlich verbesserte Eigenschaften als Benzinadditive aufweisen.

Ausgehend von diesem Stand der Technik lag eine Aufgabe der vorliegenden Erfindung darin, weitere, kostengünstige lipophile Polyether auf Basis von 1-Butenoxid zur Verfügung zu stellen, die beispielsweise als Benzinadditive verwendet werden können.

Diese Aufgabe wird gelöst durch Polyether, erhältlich aus 1-Butenoxid und einem Alkohol unter Verwendung einer Doppelmetallcyanid-Verbindung als Katalysator, wobei der Gehalt der Polyether an ungesättigten Komponenten 15 bis 30 Mol-% beträgt, und der zur Herstellung verwendete Alkohol ein monofunktioneller Alkohol ist.

Überraschenderweise zeigen gerade 1-Butenoxid-Polyether mit einem höheren Gehalt an ungestättigten Verbindungen, die mittels Doppelmetallcyanid-Katalyse erhalten wurden, sehr gute Eigenschaften als Trägeröle. Die lipophilen 1-Butenoxid-Polyether, die einen erhöhten Anteil an ungesättigten Verbindungen aufwiesen, wurden auf ihre Verwendbarkeit als Trägeröl für Kraftstoaadditive untersucht. Es wurde dabei festgestellt, dass entgegen der Lehre der WO 98/44022 diese lipophilen 1-Butenoxid-Polyether mit einem erhöhten Grad an ungesättigten Komponenten keinerlei Performanceeinbußen gegenüber klassisch hergestellten Trägerölen auf 1-Butenoxid-Basis mit einem geringeren Anteil an ungesättigten Komponenten aufwiesen.

Zur Herstellung der erfindungsgemäßen Polyether können beispielsweise Alkohole mit 2 bis 24 C-Atomen eingesetzt werden, insbesondere Alkohole mit 5 bis 15 oder beispielsweise mit 8 bis 13 C-Atomen.

Daher betrifft die vorliegende Erfindung in einer weiteren Ausführungsform auch Polyether, bei deren Herstellung der verwendete Alkohol ein Alkohol mit 2 bis 24 C-Atomen ist.

Der zur Herstellung eingesetzte Alkohol ist im Rahmen der Erfindung ein monofunktioneller Alkohol. Daher betrifft die Erfindung Polyether, bei deren Herstellung der verwendete Alkohol ein monofunktioneller Alkohol ist.

Erfindungsgemäß geeignete Alkohole sind beispielsweise Octanol, Nonanol, Dekanol, Undekanol, Dodekanol, Tridekanol, Tetradekanol, Pentadekanol, iso-Octanol, iso-Nonanol, iso-Dekanol, iso-Undekanol, iso-Dodekanol, iso-Tridekanol, iso-Tetradekanol, iso-Pentadekanol, bevorzugt iso-Dekanol, 2-Propylheptanol, Tridekanol, iso-Tridekanol oder Gemische aus C13- bis C15-Alkoholen.

Die erfindungsgemäßen Polyether weisen beispielsweise eine Viskosität bei 40°C von 20 bis 330 mm²/sec auf, insbesondere von 30 bis 300 mm²/sec. Der Sauerstoffgehalt der Polyether kann erfindungsgemäß variieren, liegt jedoch bei mindestens 15,5 %, insbesondere 16,5 %.

Damit betrifft die Erfindung in einer weiteren Ausführungsform Polyether, wobei mindestens eine der folgenden Eigenschaften (A) oder (B) erfüllt ist:
(A) der Polyether weist eine Viskosität bei 40°C von 20 bis 330 mm²/s auf;
(B) der Polyether weist einen Sauerstoffgehalt von mindestens 15,5 % auf.

Darüber hinaus betrifft die vorliegende Erfindung ein Verfahren zur Herstellung eines Polyethers mit einem Gehalt an ungesättigten Komponenten von 15 bis 30 Mol-%, bei dem 1-Butenoxid und ein monofunktioneller Alkohol in Gegenwart einer Doppelmetallcyanid-Verbindung als Katalysator miteinander zur Reaktion gebracht werden.

Das erfindungsgemäße Verfahren kann beispielsweise in einer Batch-Fahrweise erfolgen, es ist erfindungsgemäß jedoch ebenso möglich, dass das Verfahren semi-kontinuierlich oder kontinuierlich geführt wird.

Bei dem erfindungsgemäßen Verfahren werden 1-Butenoxid und ein monofunktioneller Alkohol miteinander umgesetzt. Erfindungsgemäß wird für das Verfahren bevorzugt ein monofunktioneller Alkohol mit 2 bis 24 C-Atomen eingesetzt. Daher betrifft die vorliegende Erfindung in einer Ausführungsform ein Verfahren, bei dem der eingesetzte Alkohol ein monofunktioneller Alkohol mit 2 bis 24 C-Atomen ist.

Erfindungsgemäß werden der Alkohol und 1-Butenoxid in einem Mol-Verhältnis von mindestens 1 : 3 bis maximal 1 : 100, beispielsweise von 1 : 5 bis 1 : 80, insbesondere von 1 : 10 bis 1 : 50 miteinander umgesetzt.

Als Katalysator wird beim erfindungsgemäßen Verfahren eine Doppelmetallcyanid-Verbindung eingesetzt.

Als Katalysator geeignete DMC-Verbindungen sind beispielsweise in der WO 99/16775 und der DE 10117273.7 beschrieben. Erfindungsgemäß werden insbesondere Doppelmetallcyanid-Verbindung der allgemeinen Formel I als Katalysator für das erfindungsgemäße Verfahren eingesetzt:

M¹ₐ[M²(CN)_{b}(A)_{c}]_{d} ·fM¹_{g}Xₙ·h(H₂O)·eL·kP (I),

in der
- M¹ mindestens ein Metallion, ausgewählt aus der Gruppe bestehend aus Zn²⁺ Fe²⁺, Fe³⁺ Co³⁺ , Ni²⁺, Mn²⁺ Co²⁺, Sn²⁺ Pb²⁺, Mo⁴⁺, Mo⁶⁺, Al³⁺ V⁴⁺, V⁵⁺ Sr²⁺, W⁴⁺, W⁶⁺, cr²⁺, Cr²⁺, Cd²⁺, Hg²⁺, Pd²⁺ , Pt²⁺ V²⁺ Mg²⁺ Ca²⁺, Ba²⁺ Cu²⁺ La³⁺ Ce³⁺ Ce⁴⁺ Eu³⁺ Ti³⁺ Ti⁴⁺ Ag⁺, Rh²⁺ Rh³⁺ Ru²⁺, Ru³⁺ ist,
- M² mindestens ein Metallion, ausgewählt aus der Gruppe bestehend aus Fe²⁺, Fe³⁺, Co²⁺, Co³⁺, Mn²⁺, Mn³⁺, V⁴⁺, V⁵⁺, C²⁺, C³⁺, Rh³⁺, Ru²⁺, Ir³⁺ist,
- A und X unabhängig voneinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt aus der Gruppe, bestehend aus Alkoholen, Aldehyden, Ketonen, Ethern, Polyethem, Estern, Polyestern, Polycarbonat, Harnstoffen, Amiden, primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzahl der Ligandenmoleküle eine gebrochenen oder ganze Zahl größer 0 oder 0 ist,
- f, k, h und m unabhängig voneinander eine gebrochene oder ganze Zahl größer 0 oder 0 sind.

Als organische Zusatzstoffe P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-comaleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline Doppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausführungsform sind Katalysatoren der Formel (I), bei denen k größer null ist. Der bevorzugte Katalysator enthält dann mindestens eine Doppelmetallcyanid-Verbindung, mindestens einen organischen Liganden und mindestens einen organischen Zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ausführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer Metallsalz-Lösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EP01/01893 beschrieben.

Bei einer anderen bevorzugten Ausführungsform der Katalysatoren sind f, e und k ungleich Null. Dabei handelt es sich um Doppelmetallcyanid-Katalysatoren, die einen mit Wasser mischbaren organischen Ligand (im allgemeinen in Mengen von 0,5 bis 30 Gew.%) und einen organischen Zusatzstoff (im allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden (US 5,158,922).

Insbesondere als Katalysator geeignet sind für das erfindungsgemäße Verfahren Doppelmetallcyanid-Verbindungen, die Zink, Kobalt oder Eisen oder zwei davon enthalten. Besonders geeignet ist beispielsweise Berliner Blau.

Erfindungsgemäß bevorzugt werden kristalline DMC-Verbindungen eingesetzt. In einer bevorzugten Ausführungsform wird eine kristalline DMC-Verbindung vom Zn-Co-Typ als Katalysator verwendet, der als weitere Metallsalzkomponente Zinkacetat enthält Derartige Verbindungen kristallisieren in monokliner Struktur und weisen einen plättchenförmigen Habitus auf. Derartige Verbindungen werden beispielsweise in der WO 00/74845 oder der PCT/EP01/01893 beschrieben.

Für das erfindungsgemäße Verfahren als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Verbindungen können für das erfindungsgemäße Verfahren als Pulver, Paste oder Suspension eingesetzt werden oder zu einem Formkörper verformt werden, in Formkörpern, Schäume oder ähnliches eingebracht werden oder auf Formkörper, Schäume oder ähnliches aufgebracht werden.

Erfindungsgemäß wird Doppelmetallcyanid-Verbindung in einer Menge von 5 ppm bis 5000 ppm, beispielsweise von 100 ppm bis 1000 ppm, insbesondere von 20 ppm bis 500 ppm, bezogen auf das Endmengengerüst, eingesetzt.

Daher betrifft die vorliegende Erfindung in einer weitere Ausführungsform ein Verfahren, bei dem die Doppelmetallcyanid-Verbindung in einer Menge von 5 ppm bis 5000 ppm, bezogen auf das Endmengengerüst, eingesetzt wird.

Es ist erfindungsgemäß beispielsweise möglich, das Verfahren in Batch-Fahrweise, in Semi-Batch-Fahrweise oder kontinuierlich durchzuführen. Beispielsweise kann zunächst eine konventionelle Vakuumentwässerung des Starter/DMC-Gemisches erfolgen. Anschließend kann das Vakuum mittels Stickstoff gebrochen werden und unter erhöhtem Druck von etwa 1 bar bis etwa 2 bar die Dosierung des Epoxids erfolgen. Erfindungsgemäß ist es jedoch auch möglich, dass das Vakuum nicht vollständig aufgehoben wird und der Reaktorinnendruck bei Start der Epoxidierung kleiner als 1 bar ist.

Die vorliegende Erfindung betrifft darüber hinaus auch die Verwendung eines erfindungsgemäßen Polyethers als Trägeröl oder in einer Trägerölformulierung, insbesondere in einem Additivpaket für Otto-Kraftstoffe.

Unter einer Trägerölformulierung wird im Rahmen der vorliegenden Erfindung eine Zusammensetzung enthaltend mindestens ein erfindungsgemäßes Trägeröl verstanden. Im Rahmen der vorliegenden Erfindung wird unter einem Trägeröl eine Substanz verstanden, die beispielsweise in einem Additivpaket für Otto-Kraftstoffe eingesetzt wird, und dabei die Aufgabe hat, die Ventilklebe-Neigung eines weiteren Zusatzstoffs der Trägerölformulierung, beispielsweise eines Detergents, zu unterdrücken und/oder die Eigenschaften eines Additivpaketes in Bezug auf die Reinhaltung des Einlasssystems und der Einlassventile zu verbessern.

Unter einem Additivpaket für Otto-Kraftstoffe wird im Rahmen der vorliegenden Erfindung eine Zusammensetzung verstanden, die Otto-Kraftstoffen zugesetzt werden kann, um ein verbessertes Eigenschaftsprofil des Otto-Kraftstoffs zu erreichen. Erfindungsgemäß enthält eine Additivpaket für Otto-Kraftstoffe mindestens ein erfindungsgemäßes Trägeröl oder eine erfindungsgemäße Trägerölformulierung.

Erfindungsgemäß können die Trägerölformulierungen, insbesondere die Additivpakete für Otto-Kraftsoffe, neben einem Trägeröl beispielsweise auch die folgenden Zusatzstoffe enthalten: mindestens ein Detergent, mindestens ein Lösungsmittel, mindestens ein Korrosionsschuizmuttel, mindestens einen Demulgator, mindestens einen Schrnierfähigkeitsverbesserer, mindestens einen Leitfähigkeitsverbesserer, mindestens einen Farb- oder Markierstoff

Im Rahmen der vorliegenden Erfindung hommen als Detergents insbesondere für Additivpaketen für Otto-Kraftstoffe prinzipiell beispielsweise folgende Verbindungen in Frage: Polyisobutenamin (PIBA) hergestellt über Hydroformylierung von Polyisobuten und anschließender hydrierender Aminierung; PIBA hergestellt über Nitrierung von Polyisobuten und anschließender hydrierender Aminierung; PIBA hergestellt über Epoxidierung von Polyisobuten und anschließender hydrierender Aminierung; PIBA hergestellt über Alkylierung von Phenol (Kresol) mit Polyisobuten und anschließender Mannich-Synthese mit Mono- und/oder Polyaminen; PIBA hergestellt über Chlorierung von Polyisobuten und anschließender Umsetzung mit Mono- und/oder Polyaminen; oder Polyisobutensuccinimid hergestellt über Maleinierung von Polyisobuten und anschließender Imidierung mit Mono- und/oder Polyaminen.

In einer bevorzugten Ausführungsform betrifft die vorliegende Erfindung daher die Verwendung eines erfindungsgemäßen Polyethers als Trägeröl sowie die Verwendung eines erfindungsgemäßen Polyethers in einer Trägerölformulierung, insbesondere in einem Additivpaket für Otto-Kraftstoffe.

Die erfindungsgemäßen Trägeröle, Tzägerölformulierungen und Additivpakete für Otto-Kraftstoffe haben beispielsweise den Vorteil, dass sie durch die bei der Herstellung der erfindungsgemäßen Polyether verwendeten DMC-Verbindungen besonders kostengünstig hergestellt werden können.

Erfindungsgemäß können die Trägerölformulierungen, insbesondere die Additivpakete für Otto-Kraftstoffe, einen Gehalt an mindestens einem Detergent von mindestens 10% auf. Vorzugsweise werden als Detergents für die erfindungsgemäßen Additivpakete für Otto-Kraftstoffe Polyisobutenamin oder Mannich PIBA eingesetzt. Daher betrifft die vorliegende Erfindung in einer weiteren Ausführungsform die Verwendung eines erfindungsgemäßen Polyethers in einer Trägerölformulierung, insbesondere in einem Additivpaket für Otto-Kraftstoffe, wobei die Trägerölformulierung bzw. das Additivpaket für Otto-Kraftstoffe, einen Gehalt an mindestens einem Detergent, vorzugsweise Polyisobutenamin oder Mannich PIBA, von mindestens 10 % aufweist. Prinzipiell können die erfindungsgemäßen Trägerölformulierungen, insbesondere die erfindungsgemäßen Additivpakete, auch Gemische aus einem oder mehr der genannten Detergents enthalten.

Die vorliegende Erfindung betrifft auch Trägerölformulierungen, insbesondere Additivpakete für Otto-Kraftstoffe selbst, die einen erfindungsgemäßen Polyether umfassen, sowie einen Kraftstoff, der einen erfindungsgemäßen Polyether oder eine erfindungs gemäße Trägerölformulierung, insbesondere ein erfindungsgemäßes Additivpaket für Otto-Kraftstoffe umfasst. In einer bevorzugten Ausführungsform betrifft die vorliegende Erfindung eine Trägerölformulierung, die ein Additivpaket für Otto-Kraftstoffe ist. Eine erfindungs gemäße Trägerölformulierung oder ein erfindungsgemäßes Additivpaket für Otto-Kraftstoffe kann einem Kraftstoff beispielsweise in Mengen von 100 bis 2000 mg/kg Kraftstoff zugesetzt werden.

Im Folgenden wird die vorliegende Erfindung anhand von Beispielen näher erläutert.

### Katalysator-Synthese:

In einem Rührkessel mit einem Volumen von 301, ausgestattet mit einer Schrägplattturbine, Tauchrohr für die Dosierung, pH-Elektrode, Leitfähigkeitsmesszelle und Streulichtsonde wurden 16500 g wässrige Hexacyanocobaltsäure (Cobalt-Gehalt: 9 g/l Cobalt) vorgelegt und unter Rühren auf 50 °C erwärmt. Anschließend wurden unter Rühren mit einer Rührleistung von 0,5 W/l 9695,1 g wässrige Zinkacetat-Dihydrat-Lösung (Zink-Gehalt: 2,6 Gew.-%), welche auf ebenfalls 50 °C temperiert war, innerhalb von 45 Minuten zugegeben.

Anschließend wurden 354 g Pluronic PE 6200 (BASF AG) zugegeben. Der Ansatz wurde auf 55 °C erhitzt und für 1,5 Stunden bei dieser Temperatur weitergerührt. Dann wurden 3370 g wässrige Zinkacetat-Dihydrat-Lösung (Zink-Gehalt: 2,6 Gew.-%) bei 50 °C innerhalb 5 Minuten zudosiert. Die Rührenergie wurde dabei auf 1 W/l erhöht. Die Suspension wurde bei einer Temperatur von 55 °C und einer Rührleistung von 1,0 W/l so lange nachgerührt, bis der pH-Wert von 4,15 auf 3,09 gefallen war und konstant bliebt. Die so erhaltene Fällsuspension wurde abfiltriert und mit 101 Wasser gewaschen. Der feuchte Filterkuchen wurde bei 50 °C unter Vakuum getrocknet Es wurde ein kristalliner Festkörper erhalten. Das Röntgendiffraktogramm des erhaltenen Feststoffs ließ sich monoklin indizieren, der Teilchenhabitus war plättchenförmig.

### 1. Synthese von Tridekanol N + 22 1-Butenoxid (KOH-katalysiert, Vergleichsbeispiel):

In einem 2 1 Rührreaktor wurde 150 g (0,75 mol) Tridekanol N und 2,7 g KOH vorgelegt. Es wurde dreimal mit Stickstoff gespült und anschließend eine Druckprüfung durchgeführt. Der Reaktor wurde auf ca. 10 bis 20 mbar evakuiert. Unter Vakuum wurde auf 100 °C erhitzt und 2 Stunden bei 100 °C entwässert. Das Vakuum wurde mit Stickstoff gebrochen. Es wurde auf 135 bis 140 °C erhitzt und bei dieser Temperatur zunächst 50 g 1-Butenoxid zudosiert. Nach Anspringen der Reaktion wurde innerhalb von ca. 13 Stunden bis zu einem maximalen Druck von 8 bar 1-Butenoxid zudosiert, wobei die Gesamtmenge an zudosiertem 1-Butenoxid 1188 g betrug. Anschließend wurde bei 140 °C bis zur Druckkonstanz nachgerührt, auf 80 °C abgekühlt, entspannt und 2 Stunden im Vakuum bei 10 bis 20 mbar entgast. Anschließend wurde der Reaktor entleert. Der Anteil an ungesättigten Komponenten betrug weniger als 1 Mol-%.

### 2. Synthese von Tridekanol N + 221-Butenoxid (DMC-katalysiert):

In einem 21 Rübrreaktor wurden 120 g (0,6 mol) Tridekanol N und 4,28 g DMC-Katalysator vorgelegt. Es wurde dreimal mit Stickstoff gespült und anschließend eine Druckprüfung durchgeführt. Der Reaktor wurde evakuiert (ca. 10 bis 20 mbar). Unter Vakuum wurde auf 120 °C erhitzt und für 1,5 Stunden bei 120 °C entwässert. Das Vakuum wurde mit Stickstoff gebrochen. Es wurde auf 140 °C erhitzt und bei dieser Temperatur bei einem Anfangsdruck von 0,9 bar zunächst 50 g 1-Butenoxid zudosiert. Nach Anspringen der Reaktion wurde innerhalb von 9,5 Stunden 1-Butenoxid zugegeben, wobei die Gesamtmenge an 1-Butenoxid 952 g betrug. Anschließend wurde bei 140 °C bis zur Druckkonstanz nachgerührt, auf 80 °C abgekühlt und 2 Stunden im Vakuum bei 10 bis 20 mbar entgast. Danach wurde der Reaktor entleert. Der Anteil an ungesättigten Komponenten des Reaktionsprodukts betrug 28,8 Mol-%, die kinematische Viskosität bei 40 °C lag bei 113,4 m²/s.

Versuche 3 bis 7 wurden analog zu Versuch 2 durchgeführt. Die Ergebnisse der Versuche sind in Tabelle 1 zusammengestellt.

**Tabelle 1**

| Versuch | Starter | Starter [g] | Epoxid | Epoxidmenge [g] | Katalysator | Kat.-Menge [ppm] | Temp. [°C] | ungesättigt [mol%] | Viskosität [mm²/s] |
|---|---|---|---|---|---|---|---|---|---|
| 1 | Tridekanol | 150 | 1-BO | 1188 | KOH | 2000 | 140 | < 1 | 150,00 |
| 2 | Tridekanol | 120 | 1-BO | 952 | DMC | 200 | 140 | 28,8 | 113,37 |
| 3 | Tridekanol | 120 | 1-BO | 949 | DMC | 200 | 55 | 21 | 128,89 |
| 4 | Tridekanol | 120 | 1-BO | 952 | DMC | 25 | 135 | 28,1 | 112,81 |
| 5 | Tridekanol | 120 | 1-BO | 955 | DMC | 300 | 170 | 27,1 | 103,23 |
| 6* | Tridekanol | 100 | 1-BO | 792 | DMC | 200 | 135 | 14,1 | 144,00 |
| 7* | Tridekanol | 200 | PO | 845 | DMC | 25 | 135 | 4,2 | 56,47 |

| | | | | | | | | | |
|---|---|---|---|---|---|---|---|---|---|
| * nicht erfindungsgemäß | | | | | | | | | |

### Anwendungsbeispiele

An einem Modell-Additivpaket, enthaltend ein Detergent (PIBA hergestellt über Hydroformylierung von Polyisobuten und anschließender hydrierender Aminierung), ein Trägeröl (aus Versuch Nr. 1 bzw. Versuch Nr. 4) und ein Korrosionsschutzmittel wurden folgende Untersuchungen durchgeführt
a) Emulsionstest nach DIN 51415
b) Korrosionstest nach DIN 51585 (Methode A und B)
c) Lagerstabilität bei-20 °C, 0 °C und + 35 °C
d) Leistung bzgl. Einlassventilsauberkeit ("IVD" : Intake Valve Deposits) und Neigung zur Bildung von Brennraumablagerungen ("TCD". Total Chamber Deposits) im MB M 111 gemäss CEC F-20-A-98 (CEC: Coordinating European Council).

Die Untersuchungen wurden gemäss den angegebenen Normen durchgeführt. Die Ergebnisse der Untersuchungen sind in den Tabellen 2 bis 5 dargestellt.

**Tabelle 2: Emulsionstest nach DIN 51415 (Dosierung: 600 mg/kg in Otto-Kraftstoff gemäss DIN EN 228)**

| | Zeit [min] | Additivpaket auf Basis Trägeröl aus Versuch 1 | Additivpaket auf Basis Trägeröl aus Versuch 4 |
|---|---|---|---|
| pH 4 | 1 | 4 (4 mL Schaum) | 4 (4mL Schaum) |
| | 5 | 4 (1 mL Schaum) | 3 |
| | 30 | 2 | 3 |
| | 60 | 1 | 1b |
| | | | |
| pH 7 | 1 | 3 | 3 |
| | 5 | 2 | 2 |
| | 30 | 1 | 1 |
| | 60 | 1 | 1 |
| | | | |
| pH 9 | 1 | 3 | 2 |
| | 5 | 1b | 1b |
| | 30 | 1b | 1b |
| | 60 | 1 | 1 |

**Tabelle 3: Korrosionstest nach DIN 51585 (Methode A und B) (Dosierung: 600 mg/kg in Kraftstoff gemäss DIN EN 228)**

| | bi-destilliertes Wasser | synthetisches Salzwasser |
|---|---|---|
| Blindwert | 0 | 3 |
| Addidivpaket auf Basis Trägeröl aus Versuch 1 | 0 | 0 |
| Addidivpaket auf Basis Trägeröl aus Versuch 4 | 0 | 0 |

**Tabelle 4: Lagerstabilität bei -20°C, 0°C und + 35°C**

| Zeit | Temperatur [°C] | Additivpaket auf Basis Trägeröl aus Versuch 1 | Additivpaket auf Basis Trägeröl aus Versuch 4 |
|---|---|---|---|
| Start | - 20 | --- | --- |
| | 0 | --- | --- |
| | Raumtemperatur (RT) | klar, einphasig | klar, einphasig |
| | 35 | --- | --- |
| | | | |
| 1 Tag | - 20 | klar, einphasig | klar, einphasig |
| | 0 | klar, einphasig | klar, einphasig |
| | RT | --- | --- |
| | 35 | klar, einphasig | klar, einphasig |
| | | | |
| 1 Woche | - 20 | klar, einphasig | klar, einphasig |
| | 0 | klar, einphasig | klar, einphasig |
| | RT | --- | --- |
| | 35 | klar, einphasig | klar, einphasig |
| | | | |
| 2 Wochen | - 20 | klar, einphasig | klar, einphasig |
| | 0 | klar, einphasig | klar, einphasig |
| | RT | --- | -- |
| | 35 | klar, einphasig | klar, einphasig |
| | | | |
| 4 Wochen | - 20 | klar, einphasig | klar, einphasig |
| | 0 | klar, einphasig | klar, einphasig |
| | RT | --- | --- |
| | 35 | klar, einphasig | klar, einphasig |

**Tabelle 5: Leistung bezüglich der Einlassventilsauberkeit ("IVD") und Neigung zur Bildung von Brennraumablagerungen ("TCD") im MB M 111 gemäss CEC F-20-A-98 (Dosierung: 275 mg/kg und 325 mg/kg Additivpaket in einem Otto-Kraftstoff gemäss DIN EN 228)**

| Wirkstoff | Dosierrate [mg/kg] | IVD [mg/V] | durchschnittliche IVD [mg/V] | TCD [mg/Zyl.] |
|---|---|---|---|---|
| Grundwert | 0 | 329, 388, 273, 237, 244, 298, 474, 441 | 336 | 1479 |
| Grundwert | 0 | 348, 389, 217, 209, 236, 232, 537,557 | 341 | 1458 |
| Paket auf Basis Trägeröl aus Versuch 1 | 275 | 0, 0, 51, 20, 23, 44, 0, 13 | 19 | 1530 |
| Paket auf Basis Trägeröl aus Versuch 4 | 275 | 23, 0, 58, 42, 45, 101, 0, 17 | 36 | 1417 |
| Paket auf Basis Trägeröl aus Versuch 1 | 325 | 4, 0, 21; 0, 1, 34, 1, 4 | 8 | 1544 |
| Paket auf Basis Trägeröl aus Versuch 4 | 325 | 0,0,6,0,0, 40, 0, 11 | 7 | 1494 |

## Patentansprüche

1. Polyether, erhältlich aus 1-Butenoxid und einem Alkohol unter Verwendung einer Doppelmetallcyanid-Verbindung als Katalysator, **dadurch gekennzeichnet, dass** der Gehalt an ungesättigten Komponenten 15 bis 30 Mol-% beträgt, und der zur Herstellung verwendete Alkohol ein monofunktioneller Alkohol ist.

2. Polyether nach Anspruch 1, **dadurch gekennzeichnet, dass** der zur Herstellung verwendete Alkohol ein Alkohol mit 2 bis 24 C-Atomen ist.

3. Polyether nach Anspruch 1 oder 2, **dadurch gekennzeichnet, dass** mindestens eine der folgenden Eigenschaften (A) oder (B) erfüllt ist:
(A) der Polyether weist eine Viskosität bei 40°C von 20 bis 330 mm²/s auf;
(B) der Polyether weist einen Sauerstoffgehalt von mindestens 15,5 % auf

4. Verfahren zur Herstellung eines Polyethers gemäß einem der Ansprüche 1 bis 3, **dadurch gekennzeichnet, dass** 1-Butenoxid und ein monofunktioneller Alkohol in Gegenwart einer Doppelmetallcyanid-Verbindung als Katalysator miteinander zur Reaktion gebracht werden.

5. Verwendung eines Polyethers gemäß einem der Ansprüche 1 bis 3 als Trägeröl oder in einer Trägerölformulierung, die einen Gehalt an mindestens einem Detergent von mindestens 10% aufweisen und ein Additivpaket für Otto-Kraftstoffe sein kann.

6. Trägerölformulierung, umfassend mindestens einen Polyether gemäß einem der Ansprüche 1 bis 3.

7. Trägcrölformulierung nach Anspruch 6 **dadurch gekennzeichnet, dass** die Trägerölformulierung ein Additivpaket für Otto-Kraftstoffe ist.

8. Kraftstoff, umfassend mindestens einen Polyether gemäß einem der Ansprüche 1 bis 3 oder eine Trägerölformulierung gemäß Anspruch 6 oder 7.

## Claims

1. A polyether obtainable from 1-butene oxide and an alcohol using a double metal cyanide compound as a catalyst, wherein the content of unsaturated components is from 15 to 30 mol%, and the alcohol used for the preparation is a monofunctional alcohol.

2. The polyether according to claim 1, wherein the alcohol used for the preparation is an alcohol having from 2 to 24 carbon atoms.

3. The polyether according to claim 1 or 2, wherein at least one of the following properties
(A) or (B) is fulfilled;
(A) the polyether has a viscosity at 40 °C of from 20 to 330 mm²/s;
(B) the polyether has an oxygen content of at least 15.5 %.

4. A process for preparing a polyether according to any of claims 1 to 3, which comprises reacting 1-butene oxide and a monofunctional alcohol with each other in the presence of a double metal cyanide compound as a catalyst.

5. The use of a polyether according to any of claims 1 to 3 as a carrier oil or in a carrier oil formulation which has a content of at least one detergent of at least 10 % and may be an additive package for gasoline fuels.

6. A carrier oil formulation comprising at least one polyether according to any of claims 1 to 3.

7. The carrier oil formulation according to claim 6, which is an additive package for gasoline fuels.

8. A fuel comprising at least one polyether according to any of claims 1 to 3 or a carrier oil formulation according to claim 6 or 7.

## Revendications

1. Polyéther que l'on peut obtenir à partir d'oxyde de 1-butène et d'un alcool en utilisant un composé de cyanure doublement métallique comme catalyseur, **caractérisé en ce que** la teneur en composants insaturés est de 15 à 30 % en mole, et l'alcool utilisé pour la fabrication est un alcool monofonctionnel.

2. Polyéther selon la revendication 1, **caractérisé en ce que** l'alcool utilisé pour la fabrication est un alcool ayant 2 à 24 atomes de carbone.

3. Polyéther selon l'une quelconque des revendications 1 our 2, **caractérisé en ce qu'**au moins une des propriétés (A) ou (B) suivantes est satisfaite:
(A) le polyéther présente une viscosité à 40 °C de 20 à 330 mm²/s;
(B) le polyéther présente une teneur en oxygène d'au moins 15,5 %.

4. Procédé de fabrication d'un polyéther selon l'une quelconque des revendications 1 à 3, **caractérisé en ce que** l'on fait réagir ensemble de l'oxyde de 1-butène et un alcool monofonctionnel en présence d'un composé de cyanure doublement métallique comme catalyseur.

5. Utilisation d'un polyéther selon l'une quelconque des revendications 1 à 3 comme huile véhiculaire ou dans une formulation d'huile véhiculaire qui présente une teneur d'au moins 10 % d'au moins un détergent et qui peut être un paquet d'additifs pour des carburants de moteurs.

6. Formulation d'une huile véhiculaire, comprenant au moins un polyéther selon l'une quelconque des revendications 1 à 3.

7. Formulation d'huile véhiculaire selon la revendication 6, **caractérisée en ce que** la formulation d'huile véhiculaire est un paquet d'additifs pour des carburants de moteurs.

8. Carburant comprenant au moins un polyéther selon l'une quelconque des revendications 1 à 3 ou une formulation d'huile véhiculaire selon la revendication 6 ou 7.
